(19) Europäisches Patentamt / European Patent Office / Office européen des brevets

(11) **EP 1 862 785 A1**

(12) **DEMANDE DE BREVET EUROPEEN**

(43) Date de publication:
**05.12.2007 Bulletin 2007/49**

(51) Int Cl.:
*G01K 3/04* (2006.01)    *G01K 1/02* (2006.01)

(21) Numéro de dépôt: **06114646.0**

(22) Date de dépôt: **29.05.2006**

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(71) Demandeur: **Sokymat Automotive GmbH
51580 Reichshof-Wehnrath (DE)**

(72) Inventeurs:
• **Blaschke, Robert
51766, Engelskirchen (DE)**
• **Ening, Christian
50735, Köln (DE)**

(74) Mandataire: **Vigand, Philippe et al
ICB,
Ingénieurs Conseils en Brevets SA,
Rue des Sors 7
2074 Marin (CH)**

(54) **Circuit électronique indicateur du temps et de la température destiné à être placé sur un produit à surveiller**

(57) Le circuit électronique indicateur du temps et de la température (1) est destiné à être placé sur un produit périssable à surveiller, tel qu'un produit alimentaire ou un produit médical. Le circuit électronique est configuré sous la forme d'un transpondeur, qui comprend une interface (6, 9) d'émission et de réception sans fil de signaux radiofréquences pour une communication avec une unité de lecture (10), et une logique de commande (7) reliée à l'interface. Le circuit électronique indicateur comprend un élément de stockage de charges électriques (C), qui est de préférence constitué par un condensateur. Ce condensateur (C) peut être chargé initialement par une source de tension (2) à un niveau de charges déterminé sous la commande de la logique de commande (7) pour débuter une opération de surveillance du produit. Le condensateur chargé et déconnecté de la source de tension est susceptible de se décharger en fonction du temps et de la température pour permettre de déterminer l'état du produit sur la base du niveau de décharge dudit élément de stockage. Au moins une résistance ($R_T$, $R_N$) peut être connectée en parallèle au condensateur pour accélérer la décharge dudit condensateur.

Fig. 1

EP 1 862 785 A1

**Description**

L'invention concerne un circuit électronique indicateur du temps et de la température destiné à être placé sur un produit périssable à surveiller, tel qu'un produit alimentaire ou médical. Le circuit électronique est de préférence configuré sous la forme d'un transpondeur. Le circuit transpondeur comprend donc une interface d'émission et de réception sans fil de signaux de données et/ou de commandes pour une communication avec une unité de lecture et une logique de commande reliée à l'interface.

Il est connu d'utiliser un indicateur du temps et de la température pour le contrôle de l'état d'un produit périssable sur lequel il est placé. Habituellement, un tel indicateur dénommé TTI (Time Temperature Indicator en terminologie anglaise) peut comprendre un élément changeant de couleur ou d'intensité lumineuse dans le temps et en fonction de la température ambiante, dû à des effets chimiques. Cet élément indicateur fait généralement partie d'une étiquette placée sur ledit produit à surveiller, qui peut être un produit alimentaire ou un produit médical (médicament). Grâce à cet élément, cela permet de fournir une indication visuelle pour la gestion ou le contrôle d'un produit sensible au transport ou pour une chaîne du froid par exemple. Une version d'un tel indicateur du temps et de la température est notamment décrite dans la demande de brevet CA 2,516,571. Comme la couleur ou l'intensité lumineuse peuvent subir certains changements marginaux dans le temps et en fonction de la température, un tel indicateur est susceptible de fournir une indication erronée de l'état du produit, ce qui peut constituer un inconvénient.

Il est également connu d'utiliser un indicateur électronique du temps et de la température comme indiqué dans le brevet US 6,950,028, sous la forme d'une unité portable de relativement grande dimension. Cet indicateur électronique comprend un microprocesseur relié à une mémoire de données, un capteur de température (thermocouple) susceptible de fournir des signaux de mesure au microprocesseur, un dispositif d'affichage du type LCD pour indiquer visuellement l'état d'un produit à surveiller. Tous les composants de l'indicateur électronique sont alimentés par une batterie logée dans l'unité portable. Cet indicateur électronique peut être programmé électroniquement en fonction du produit à surveiller. Etant donné la grande dimension d'un tel indicateur électronique, il ne peut pas être placé sur ou dans l'emballage d'un produit de petite dimension, tel qu'un produit médical ou alimentaire à surveiller, ce qui constitue un inconvénient.

L'observation par voie optique de l'état d'un produit à l'aide d'un indicateur comme mentionné dans l'état de l'art peut être effectuée directement par un être humain, mais de manière non précise et relativement lentement. Pour une observation plus rapide et précise par voie optique de l'état d'un produit, il est nécessaire d'utiliser des dispositifs optiques complexes, ce qui constitue un inconvénient. De plus généralement avec de tels indicateurs de l'art antérieur, les effets du temps sont entièrement dépendant des effets de température, les deux paramètres influençant l'état de l'indicateur de la même manière. De tels indicateurs peuvent également être mis en fonction de manière non souhaitée à tout instant et par toute personne, ce qui ne garantit pas une grande sécurité pour le produit sur lequel il est placé. Ainsi aucun mécanisme de sécurité n'est prévu pour empêcher une initialisation non permise.

L'invention a pour but principal de fournir un circuit électronique indicateur du temps et de la température pour un produit périssable qui pallie les inconvénients susmentionnés des indicateurs de l'état de l'art.

A cet effet, l'invention concerne un circuit électronique indicateur du temps et de la température selon les caractéristiques de la revendication indépendante 1.

Des formes avantageuses du circuit électronique sont définies dans les revendications dépendantes 2 à 17.

Un avantage du circuit électronique indicateur selon l'invention réside dans le fait qu'il est possible de lire plus rapidement et de manière plus sûre une indication par voie électronique relative à la décharge de l'élément de stockage de charges électriques, que des solutions classiques. Pour ce faire, le circuit électronique est configuré sous forme d'un transpondeur ayant une interface RFID pour effectuer par exemple une initialisation électronique du circuit électronique indicateur. Cette initialisation peut ainsi être effectuée à distance et sous contrôle par une unité de lecture à l'aide de signaux radiofréquences spécifiques.

Avantageusement, la communication par signaux radiofréquences entre l'interface RFID et l'unité de lecture ne peut se faire qu'après des étapes de reconnaissance ou d'identification traditionnelles entre le circuit transpondeur et l'unité de lecture. Ainsi, cela réduit le risque d'une mise en fonction non autorisée du circuit électronique indicateur. Toute action abusive comme le redémarrage d'un cycle de contrôle ou l'accès en écriture des moyens de mémorisation du circuit électronique peuvent être interdites par une protection par mot de passe et/ou une authentification cryptée. De plus, une autre protection avec un bit de blocage, qui est enregistré ou écrit une seule fois dans les moyens de mémorisation, peut être utilisée pour configurer le circuit électronique pour un usage unique. Une fiabilité de la transmission de données peut également être améliorée en ajoutant une information additionnelle dans les signaux de données ou de commandes, par exemple des données du type CRC (Cyclic Reduncancy Code en terminologie anglaise).

Avantageusement, la source d'énergie électrique utilisée pour initialiser l'élément de stockage de charges électriques est dérivée directement des signaux radiofréquences captés par l'antenne de l'interface RFID. Cette source d'énergie électrique est une source de tension, qui permet d'alimenter en électricité tous les autres composants du circuit électronique.

Avantageusement dans le cas où un circuit électronique indicateur est équipé avec des moyens de mémorisation de données, une ou plusieurs données et des valeurs du temps peuvent être enregistrées, par exemple dès le début de la surveillance ou au terme de la surveillance ou durant des contrôles intermédiaires. En connaissant la durée d'un transport de produits périssables, une information de température plus détaillée peut être extraite par rapport aux indicateurs de l'état de l'art, qui combine le temps et la température.

Avantageusement, le circuit électronique indicateur selon l'invention peut être utilisé à plusieurs reprises sans que les effets liés au temps et à la température disparaissent et sans usure. Il peut également comprendre plusieurs éléments de stockage de charges électriques de durée de décharge différente en fonction du produit sur lequel le circuit électronique est placé. Une programmation du circuit électronique peut donc être effectuée notamment par l'unité de lecture ou en fonction de données mémorisées dans les moyens de mémorisation. Chaque élément de stockage peut comprendre un condensateur mis en parallèle avec une première résistance pour accélérer la décharge du condensateur, ainsi qu'une seconde résistance du type NTC pour accélérer la décharge due aux effets thermiques. Si l'élément de stockage de charges électriques est une cellule de mémoire non-volatile, aucune résistance n'est placée en parallèle avec ladite cellule en fonction de courants de fuite, qui dépendent de la température.

Comme le circuit électronique est configuré sous forme d'un transpondeur, un code d'identification unique est mémorisé dans les moyens de mémorisation pour une reconnaissance spécifique par une unité de lecture. Ainsi, il peut être envisageable d'interroger simultanément plusieurs transpondeurs dans une zone déterminée autour de l'unité de lecture par l'utilisation d'un procédé traditionnel anti-collision.

Avantageusement, des caractéristiques de décharge du circuit électronique indicateur peuvent être évaluées durant le procédé de fabrication dudit circuit et enregistrées dans des moyens de mémorisation. Ces données de calibration peuvent aussi être utilisées par l'unité de lecture pour améliorer la précision de la mesure du niveau de décharge de l'élément de stockage de charges électriques. Il peut être prévu également au cours du procédé de surveillance, d'effectuer des tests intermédiaires ou des tests au terme du cycle de surveillance afin d'enregistrer dans les moyens de mémorisation les données relatives à ces tests. Un historique de la surveillance de plusieurs phases de transports peut être enregistré et rappelé sur requête.

Les buts, avantages et caractéristiques du circuit électronique indicateur du temps et de la température apparaîtront mieux dans la description suivante de formes d'exécution illustrées par les dessins sur lesquels :

la figure 1 représente de manière simplifiée une première forme d'exécution d'un circuit électronique indicateur du temps et de la température pour un produit à surveiller selon l'invention, susceptible de communiquer avec une unité de lecture,
la figure 2 représente de manière simplifiée une seconde forme d'exécution d'un circuit électronique indicateur du temps et de la température configuré en fonction du produit sur lequel il est placé pour le surveiller selon l'invention, et susceptible de communiquer avec une unité de lecture.

La description suivante est relative à un circuit électronique indicateur du temps et de la température destiné à être placé sur un produit périssable, tel qu'un produit alimentaire ou un produit médical. De cette manière, une opération de surveillance dudit produit, qui est susceptible de se détériorer au cours du temps et en fonction de la température, peut être effectuée. Il est à noter que tous les composants électroniques du circuit électronique indicateur, qui sont bien connus d'un homme du métier dans ce domaine technique, ne seront pas expliqués en détail.

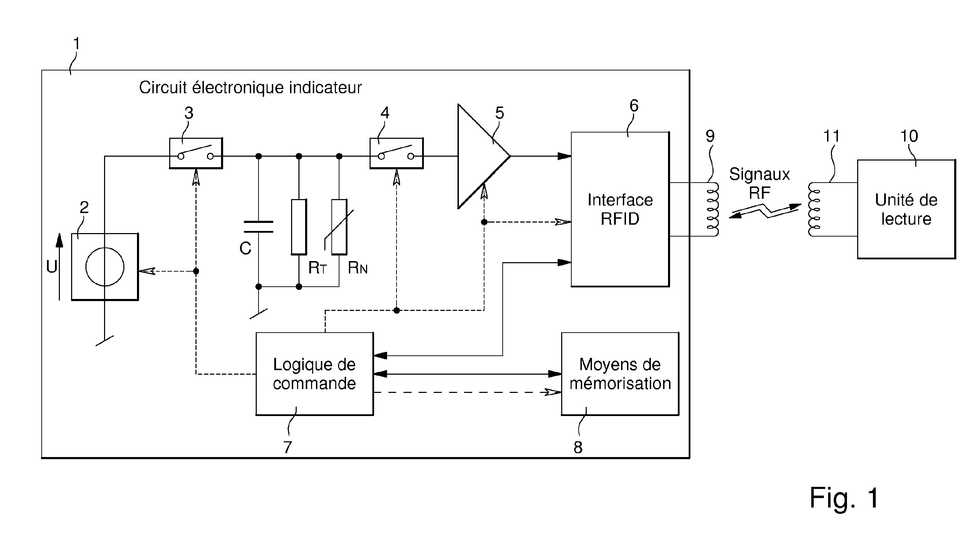

La figure 1 représente de manière simplifiée une première forme d'exécution d'un circuit électronique indicateur configuré sous la forme d'un transpondeur 1 susceptible d'établir une communication par des signaux radiofréquences RF avec une unité de lecture 10. Pour ce faire, le circuit électronique 1 comprend une interface RFID 6 ayant une antenne 9 pour l'émission et la réception de signaux radiofréquences RF, ainsi qu'une logique de commande 7 reliée à l'interface 6. La logique de commande permet de commander l'interface afin de gérer la transmission et la réception des signaux de données ou de commandes. Cette logique de commande 7 peut être une machine d'état ou logique câblée ou un microprocesseur, pour la gestion des opérations effectuées dans le circuit électronique indicateur.

Le circuit électronique indicateur 1 comprend encore un élément de stockage de charges électriques, qui comprend un condensateur C comme représenté sur la figure 1. Cet élément de stockage de charges électriques est utilisé pour fournir une indication du temps et de la température du produit à surveiller. Au début de chaque période de surveillance, cet élément de stockage de charges électriques C est initialement chargé à un niveau déterminé par une source d'énergie électrique 2, qui est de préférence une source de tension. Pour ce faire, la source de tension 2 commandée par la logique de commande 7 est connectée au condensateur C par l'intermédiaire d'un premier commutateur 3, qui est fermé sous la commande de la logique de commande 7. Ceci permet de charger ledit condensateur à un niveau de tension U correspondant au niveau de tension de la source de tension 2. Une fois que le commutateur 3 est ouvert, le condensateur C, qui est réalisé dans un substrat semi-conducteur, tel que dans un substrat en silicium, va se décharger progressivement sur une relativement longue période. Cette décharge progressive du condensateur permet de fournir une indication du temps et de la température pour un produit sur lequel le circuit électronique est placé.

Il est à noter que l'élément de stockage de charges électriques peut également être une cellule de mémoire non-volatile (par exemple EEPROM ou FLASH), car le principe fonctionnel basé sur la décharge graduelle de l'élément de stockage réalisé dans un tel substrat semi-conducteur est bien connu. Les charges électriques diffusent dans le substrat comme une fonction du temps et de la température. Cependant avec l'utilisation d'une cellule de mémoire non-volatile, aucune résistance n'est placée généralement en parallèle avec ladite cellule en fonction de courants de fuite, qui dépendent de la température.

Des moyens de mémorisation 8 du circuit électronique sont également reliés à la logique de commande 7 afin de mémoriser diverses données du processus de surveillance du produit périssable et des données échangées avec l'unité de lecture. La logique de commande 7 coordonne aussi l'accès en écriture et lecture des moyens de mémorisation. Ces moyens de mémorisation permettent également de fournir sur requête de la logique de commande certaines données relatives à un type de produit à contrôler. Ces moyens de mémorisation sont constitués de préférence par une mémoire non-volatile, telle qu'une mémoire de type EEPROM ou FLASH.

Comme le circuit électronique indicateur 1 est configuré sous la forme d'un transpondeur, les moyens de mémorisation 8 peuvent comprendre également une mémoire du type ROM dans laquelle est mémorisé un code d'identification spécifique du transpondeur. Ce code d'identification est transmis sur requête de l'unité de lecture afin d'autoriser une communication entre l'unité et le circuit électronique. Il peut être prévu également pour plus de sécurité d'effectuer une authentification mutuelle entre l'unité et le transpondeur à l'aide d'un algorithme à clé privée mémorisé et mis en fonction notamment dans la logique de commande 7. Un algorithme de cryptage peut également être mémorisé et mis en fonction dans la logique de commande 7 pour la transmission de données cryptées. De plus, l'utilisation d'un mot de passe transmis par l'unité de lecture dans les signaux de données et de commandes peut également être envisagé pour permettre à la logique de commande de commander l'initialisation de l'élément de stockage de charges C.

Il est à noter également qu'une autre protection peut être utilisée pour empêcher toute utilisation abusive du circuit indicateur électronique. Pour ce faire, il peut être prévu un bit de blocage enregistré ou écrit une seule fois dans les moyens de mémorisation pour configurer le circuit électronique pour un usage unique.

La communication entre le circuit indicateur 1 et l'unité de lecture 10 peut être effectuée quand le circuit se trouve dans une zone déterminée autour de l'antenne 11 de réception et de transmission de l'unité de lecture 10. L'antenne 9 du circuit électronique 1 est capable de recevoir des signaux radiofréquences RF à une distance voisine de quelques mètres de l'antenne 11 de l'unité de lecture 10. Le circuit électronique indicateur sous la forme d'un transpondeur 1 peut être ainsi placé sur tout type de produit périssable à surveiller par rapport aux conditions environnementales dans le temps et en fonction de la température.

De préférence, le circuit électronique indicateur sous forme de transpondeur 1 est du type passif, c'est-à-dire qu'il est électriquement alimenté grâce aux signaux radiofréquences RF captés à l'antenne 9 de l'interface RFID. De manière conventionnelle, un redresseur AC/DC connecté aux bornes de l'antenne 9 est utilisé afin de charger un accumulateur servant comme source de tension 2.

Il peut être prévu également de placer en parallèle au condensateur C une première résistance $R_T$ afin d'accélérer la décharge du condensateur en fonction de la durée escomptée pour tel ou tel produit à surveiller. Une seconde résistance $R_N$ à coefficient de température négatif, tel qu'une résistance du type NTC peut être également mise en parallèle à la première résistance $R_T$ et au condensateur C afin d'accélérer les effets liés à la température. Bien entendu, l'une des résistances ou les deux résistances sont placées en parallèle au condensateur uniquement s'il est nécessaire d'accélérer la décharge du condensateur pour tenir compte du temps et de la température selon le type de produit périssable à surveiller.

La corrélation entre la température et la décroissance de la charge électrique sur le condensateur C peut être décrite avec la loi d'Arrhenius suivante :

$$A_f = \exp E_a \cdot (1/T_{ref} - 1/T_{amb})/k$$

où $A_f$ définit le facteur d'accélération pour la décroissance de la charge électrique, $E_a$ définit l'énergie d'activation, k définit la constante de Boltzmann, $T_{ref}$ définit la référence de température absolue et $T_{amb}$ définit la température ambiante absolue.

Sur requête de l'unité de lecture 10 ou par périodes temporelles programmées par la logique de commande 7 après la mise en fonction du circuit électronique indicateur, un contrôle du niveau de charge ou décharge du condensateur C peut être effectué. Pour ce faire, un circuit d'analyse de charges sensible 5 est connecté au condensateur C par l'intermédiaire d'un second commutateur électronique 4, qui est fermé par une commande transmise par la logique de commande 7. Ce circuit d'analyse peut comprendre un convertisseur d'impédance suivi par un convertisseur A/D, tel qu'un étage S&H (Simple and Hold en terminologie anglaise).

Il est à noter que tous les composants du circuit électronique 1 à l'exception de l'antenne 9 peuvent être intégrés dans un unique circuit intégré réalisé dans un substrat en silicium par exemple dans une technologie CMOS.

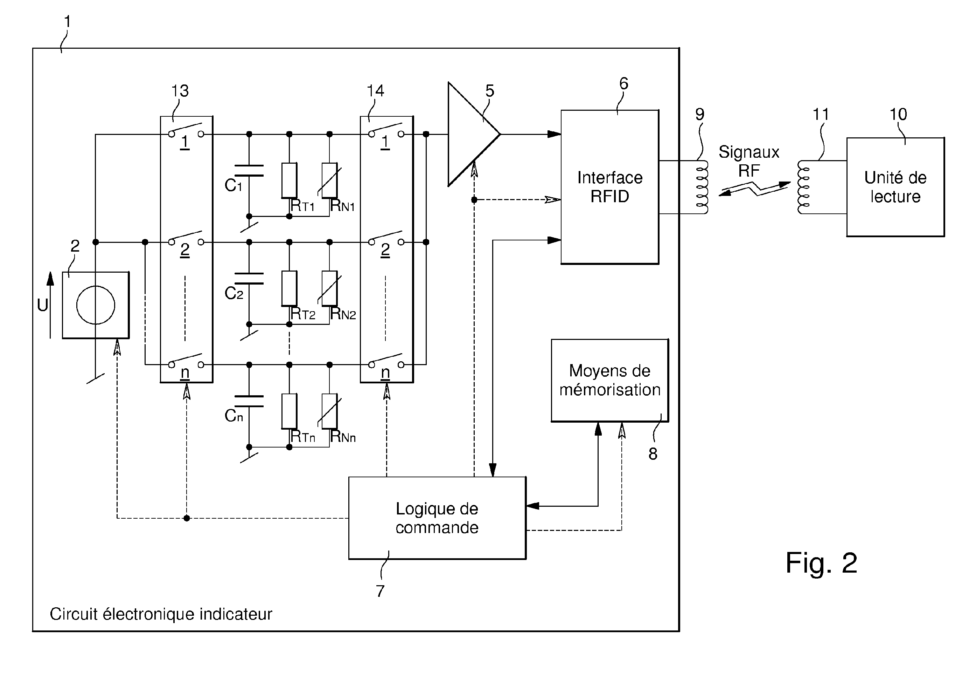

La figure 2 représente de manière simplifiée une seconde forme d'exécution d'un circuit électronique indicateur configuré sous la forme d'un transpondeur 1 susceptible d'établir une communication par des signaux radiofréquences RF avec une unité de lecture 10. Il est à noter que tous les composants du circuit électronique indicateur 1 de cette seconde forme d'exécution, qui correspondent à ceux de la première forme d'exécution de la figure 1, portent des signes de référence identiques. Par simplification, il ne sera ainsi pas répété la description de chacun de ces composants pour la figure 2.

La différence essentielle du circuit électronique indicateur présenté à la figure 2 est que plusieurs éléments de stockage de charges électriques sont prévus. Ceci permet d'obtenir une meilleure corrélation entre les caractéristiques de décharge des éléments de stockage de charges électriques et la détérioration de produits alimentaires ou médicaux.

Chaque élément de stockage de charges électrique comprend par exemple un condensateur $C_1$, $C_2$ à Cn. Chaque condensateur peut être mis en parallèle avec une première résistance $R_{T1}$, $R_{T2}$ à $R_{Tn}$ pour accélérer la décharge du condensateur correspondant sélectionné, ainsi qu'une seconde résistance du type NTC $R_{N1}$, $R_{N2}$ à $R_{Nn}$ pour accélérer la décharge due aux effets thermiques. De cette façon, les éléments de stockage peuvent être réalisés avec des pourcentages différents de décharge en fonction du type du produit sur lequel le circuit électronique est placé.

Un premier multiplexeur 13, faisant office de premier commutateur, est placé entre la source de tension 2 du circuit électronique et l'ensemble des éléments de stockage de charges électriques. Un second multiplexeur 14, faisant office de second commutateur, est placé entre l'ensemble des éléments de stockage de charges électriques et le circuit d'analyse de charges sensible 5. Chaque multiplexeur 13 et 14 est commandé par un mot binaire fourni par la logique de commande 7 afin de sélectionner un des éléments de stockage de charges électriques en fonction du produit à surveiller. Le premier multiplexeur 13 est commandé par la logique de commande pour l'initialisation de l'élément de stockage sélectionné, alors que le second multiplexeur 14 est commandé par la logique de commande pour une mesure du niveau de charge ou décharge de l'élément de stockage de charges électriques.

Les moyens de mémorisation 8, qui comprennent notamment une mémoire non-volatile, peuvent fournir des informations relatives au produit à surveiller à la logique de commande afin de programmer le circuit électronique ou d'opérer la sélection de l'élément de stockage de charges adéquat. Des données mémorisées de plusieurs éléments de stockage de charges notamment dans leur phase de décharge peuvent être utilisées et interpolées pour qu'une précision suffisante soit atteinte. D'autres caractéristiques spécifiques, concernant par exemple le comportement à la décharge, qui est mesuré dans une ligne de test au terme d'un procédé de fabrication du circuit électronique TTI, peuvent être enregistrées dans les moyens de mémorisation. L'information du temps et de la date peut être mémorisée également dans les moyens de mémorisation 8 dès que débutent les opérations de transfert du produit périssable. Une fois que le produit sur lequel est placé le circuit électronique est arrivé à réception, la durée du transport peut être calculée facilement grâce au circuit électronique indicateur.

A partir de la description qui vient d'être faite de multiples variantes de réalisation du circuit électronique indicateur du temps et de la température peuvent être conçues par l'homme du métier sans sortir du cadre de l'invention définie par les revendications. Il peut être prévu de placer d'autres composants électroniques combinés avec chaque condensateur de l'élément de stockage de charges électriques pour améliorer le comportement à la décharge. Il peut être prévu de placer un premier commutateur entre une borne de masse de la source de tension et une borne du condensateur pour relier ledit condensateur à la source de tension quand le commutateur est fermé. Chaque commutateur peut être réalisé avec un transistor de type MOS. L'initialisation de chaque élément de stockage de charges électriques ou des opérations de mesure du niveau de charge ou décharge de chaque élément de stockage peuvent être programmées dans le circuit électronique indicateur et mémorisées dans les moyens de mémorisation.

## Revendications

1. Circuit électronique indicateur du temps et de la température (1) destiné à être placé sur un produit périssable à surveiller, tel qu'un produit alimentaire ou un produit médical, ledit circuit étant configuré sous la forme d'un transpondeur, qui comprend une interface (6, 9) d'émission et de réception sans fil de signaux de données et/ou de commandes pour une communication avec une unité de lecture (10), et une logique de commande (7) reliée à l'interface, **caractérisé en ce qu'**il comprend un élément de stockage de charges électriques (C), qui peut être chargé par une source d'énergie électrique (2) à un niveau de charge déterminé sous la commande de la logique de commande (7) pour débuter une opération de surveillance du produit, l'élément de stockage chargé et déconnecté de la source d'énergie électrique étant susceptible de se décharger en fonction du temps et de la température pour permettre de déterminer l'état du produit sur la base du niveau de décharge dudit élément de stockage.

2. Circuit électronique indicateur (1) selon la revendication 1, **caractérisé en ce que** l'interface (6) comprend une antenne (9) pour l'émission et la réception de signaux radiofréquences de données et/ou de commandes avec une unité de lecture dans une zone déterminée autour de l'unité de lecture (10).

3. Circuit électronique indicateur (1) selon la revendication 2, **caractérisé en ce que** la source d'énergie électrique est une source de tension (2) dérivée de signaux radiofréquences captés par l'antenne (9) de l'interface (6), ladite source de tension alimentant tous les composants électroniques du circuit électronique.

4. Circuit électronique indicateur (1) selon l'une des revendications précédentes, **caractérisé en ce que** l'élément de stockage de charges électriques est connecté à la source d'énergie électrique (2) par l'intermédiaire d'un premier commutateur (3), qui est commandé par la logique de commande (7), la source d'énergie électrique chargeant l'élément de stockage de charges électriques lorsque le premier commutateur est commuté dans un état fermé.

5. Circuit électronique indicateur (1) selon l'une des revendications précédentes, **caractérisé en ce qu'**il comprend un circuit d'analyse de charges (5), qui est connecté à l'élément de stockage de charges électriques (C) par l'intermédiaire d'un second commutateur (4), qui est commandé par la logique de commande pour être commuté dans un état ouvert ou dans un état fermé pour permettre au circuit d'analyse de mesurer le niveau de décharge de l'élément de stockage de charges.

6. Circuit électronique indicateur (1) selon la revendication 5, **caractérisé en ce que** le circuit d'analyse (5) fournit un signal de mesure du niveau de décharge de l'élément de stockage à l'interface (4) pour que sous la commande de la logique de commande (7), l'interface (6) transmette des signaux radiofréquences de données relatives au niveau de décharge sur requête d'une unité de lecture (10).

7. Circuit électronique indicateur (1) selon l'une des revendications précédentes, **caractérisé en ce que** l'élément de stockage de charges électriques comprend un condensateur (C) ou une cellule de mémoire non-volatile.

8. Circuit électronique indicateur (1) selon la revendication 7, **caractérisé en ce qu'**une première résistance ($R_T$) est connectée directement en parallèle au condensateur pour accélérer la décharge du condensateur (C).

9. Circuit électronique indicateur (1) selon l'une des revendications 7 et 8, **caractérisé en ce qu'**une seconde résistance à coefficient de température négatif ($R_N$) est connectée directement en parallèle au condensateur pour accélérer la décharge du condensateur (C) due aux effets de la température.

10. Circuit électronique indicateur (1) selon la revendication 1, **caractérisé en ce qu'**il comprend plusieurs éléments de stockage de charges électriques ($C_1$, $C_2$, Cn) avec des pourcentages différents de décharge dépendant du type du produit périssable à surveiller, et **en ce que** la logique de commande (7) sélectionne un des éléments de stockage de charges électriques à charger initialement à un niveau de charge déterminé.

11. Circuit électronique indicateur (1) selon la revendication 10, **caractérisé en ce qu'**un premier multiplexeur (13) est placé entre la source d'énergie électrique (2) et l'ensemble des éléments de stockage de charges électriques, ledit premier multiplexeur étant commandé par un mot binaire fourni par la logique de commande pour la sélection d'un élément de stockage à charger initialement au niveau de charge déterminé, et **en ce qu'**un second multiplexeur (14) commandé par un mot binaire de la logique de commande est placé entre l'ensemble des éléments de stockage de charges électriques et un circuit d'analyse (5) du niveau de décharge ou de charge de l'élément de stockage sélectionné.

12. Circuit électronique indicateur (1) selon l'une des revendications 10 et 11, **caractérisé en ce que** chaque élément de stockage de charges électriques comprend un condensateur spécifique ($C_1$, $C_2$, Cn) avec au moins une résistance en parallèle ($R_{T1}$, $R_{T2}$, $R_{Tn}$) pour accélérer la décharge du condensateur en fonction du produit périssable à surveiller.

13. Circuit électronique indicateur (1) selon l'une des revendications précédentes, **caractérisé en ce qu'**il comprend des moyens de mémorisation (8) reliés à la logique de commande (7), lesdits moyens de mémorisation comprenant mémorisé un code d'identification unique du circuit électronique indicateur afin de permettre une communication sans fil du circuit électronique avec une unité de lecture uniquement en cas de reconnaissance du code d'identification unique.

14. Circuit électronique indicateur (1) selon la revendication 13, **caractérisé en ce que** la logique de commande (7) est programmée de telle manière à n'autoriser une requête d'initialisation de l'élément de stockage de charges électriques par une unité de lecture que sur la base de l'introduction d'un mot de passe spécifique mémorisé dans les moyens de mémorisation (8) fourni dans les signaux radiofréquences de commandes captés par l'antenne (9) de l'interface (6).

15. Circuit électronique indicateur (1) selon la revendication 13, **caractérisé en ce que** les moyens de mémorisation (8) sont configurés avec la logique de

**EP 1 862 785 A1**

commande (7) pour écrire ou enregistrer uniquement une fois un bit de blocage dans les moyens de mémorisation pour empêcher une autre utilisation du circuit électronique indicateur.

**16.** Circuit électronique indicateur (1) selon la revendication 13, **caractérisé en ce qu'**un algorithme de cryptage est enregistré dans les moyens de mémorisation (8) pour être mis en fonction dans la logique de commande (7) pour une transmission de signaux de données et/ou de commandes cryptés avec une unité de lecture (10).

**17.** Circuit électronique indicateur (1) selon l'une des revendications précédentes, **caractérisé en ce que** tous les composants du circuit électronique (1) à l'exception de l'antenne (9) sont intégrés dans un unique circuit intégré réalisé en technologie CMOS dans un substrat en silicium.

Fig. 1

EP 1 862 785 A1

Fig. 2

EP 1 862 785 A1

**Office européen des brevets** **RAPPORT DE RECHERCHE EUROPEENNE**

Numéro de la demande

EP 06 11 4646

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | US 2005/248455 A1 (POPE GARY W [US] ET AL) 10 novembre 2005 (2005-11-10) * abrégé * * alinéa [0008] - alinéa [0010] * * alinéa [0031] - alinéa [0033] * * figures 1,2,8,10 * ----- | 1-17 | INV. G01K3/04 G01K1/02 |
| Y | US 6 320 512 B1 (NICHOLSON LARRY [US] ET AL) 20 novembre 2001 (2001-11-20) * abrégé * * figures 2,3 * * colonne 2, ligne 37 - colonne 3, ligne 55 * ----- | 1-17 | |
| A | US 2002/094010 A1 (VAIL DAVID KENYON [US] ET AL) 18 juillet 2002 (2002-07-18) * abrégé * * alinéa [0010] - alinéa [0013] * * alinéa [0029] - alinéa [0032] * ----- | 1-17 | |
| A | US 2002/163436 A1 (SINGH ABTAR [US] ET AL) 7 novembre 2002 (2002-11-07) * abrégé * ----- | 1-17 | DOMAINES TECHNIQUES RECHERCHES (IPC) G01K |

Le présent rapport a été établi pour toutes les revendications

| Lieu de la recherche | Date d'achèvement de la recherche | Examinateur |
|---|---|---|
| Munich | 3 novembre 2006 | Pisani, Francesca |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

........................................................................................
& : membre de la même famille, document correspondant

EPO FORM 1503 03.82 (P04C02)

10

**ANNEXE AU RAPPORT DE RECHERCHE EUROPEENNE
RELATIF A LA DEMANDE DE BREVET EUROPEEN NO.**

EP 06 11 4646

La présente annexe indique les membres de la famille de brevets relatifs aux documents brevets cités dans le rapport de
recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

03-11-2006

| Document brevet cité au rapport de recherche | | Date de publication | Membre(s) de la famille de brevet(s) | | Date de publication |
|---|---|---|---|---|---|
| US 2005248455 | A1 | 10-11-2005 | WO | 2005106813 A2 | 10-11-2005 |
| US 6320512 | B1 | 20-11-2001 | AUCUN | | |
| US 2002094010 | A1 | 18-07-2002 | AUCUN | | |
| US 2002163436 | A1 | 07-11-2002 | AU | 2002303519 A2 | 18-11-2002 |
| | | | EP | 1393276 A2 | 03-03-2004 |
| | | | WO | 02089600 A2 | 14-11-2002 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CA 2516571

- US 6950028 B